Europäisches Patentamt

European Patent Office

Office européen des brevets

(11) Publication number: **0 211 596 A2**

(12) # EUROPEAN PATENT APPLICATION

(21) Application number: 86305809.5

(51) Int. Cl.⁴: **H04N 3/10**

(22) Date of filing: 29.07.86

(30) Priority: 07.08.85 GB 8519768

(43) Date of publication of application:
25.02.87 Bulletin 87/09

(84) Designated Contracting States:
AT BE CH DE FR GB IT LI LU NL SE

(71) Applicant: STREET, Graham Stewart Brandon
Impstone House Pamber Road
Silchester Reading RG7 2NU(GB)

(72) Inventor: STREET, Graham Stewart Brandon
Impstone House Pamber Road
Silchester Reading RG7 2NU(GB)

(74) Representative: Woodin, Anthony John et al
Fitzpatricks 53A High Street
Huntingdon Cambridgeshire PE18 6AQ(GB)

(54) **Apparatus for the display of high definition images.**

(57) Apparatus for producing high definition projected video images comprising light-emitting means providing in use at least one collimated beam of light, acousto-optic means for modulating said at least one beam of light, means for scanning said at least one beam of light at a substantially constant angular velocity in a plane aligned with the direction of travel of the modulating sound in the acousto-optic means and means for matching optically the angular velocity with respect to the scanning means of the modulating sound in the acousto-optic means to the angular velocity of beam scanning of the scanning means so that said modulating sound angular velocity or the angular velocity of an image of the pattern thereof is substantially equal to and aligned with said beam scanning angular velocity and, for a given length of optical path intermediate the position of modulation and the scanning means, the bandwidth of the projected video image is substantially greater in use than the bandwidth achievable with a single channel acousto-optic modulator positioned at the Scophony distance from the scanning means, said Scophony distance being no less than said given length of optical path.

FIG. 3A.

## APPARATUS FOR THE DISPLAY OF HIGH DEFINITION IMAGES

This invention is concerned with apparatus for the display of video information and specifically with high definition images generated using laser raster scanning techniques.

It is well known that a raster image may be generated using a laser beam deflected horizontally by a rapidly spinning polygonal mirror and vertically by a lower frequency scanning device such as a mirror galvanometer. By modulating the intensity of the laser beam a two-dimensional image of exceptional clarity and contrast may be projected onto a viewing screen or other image-receiving surface. In certain applications, such as electro-photography the lower frequency scan is achieved by rotating a photosensitive drum in a direction orthogonal to the fast scan.

A technique which is particularly suitable for the display of images at television rates depends on the matching of the rotational speed of the polygonal mirror scanner, the velocity of sound in an acousto-optic modulator and the choice of distance of this modulator from the polygonal scanner. The basic principles of this scanning technique were developed at the Scophony Laboratory of London in the 1930's before the advent of the laser. As the image resolution and/or data content are increased for a given frame repetition rate, the horizontal scan rate is typically increased and the distance of the modulator from the line scanner - (the Scophony distance) decreased accordingly. In practice it has been found that a conventional video line rate of 15.6 KHz is readily achieved with a Scophony distance of the order of 460 mms and a sound velocity in the modulator of 3630 metres/sec. To increase the number of scan lines per frame and the rate at which these are displayed both the Scophony distance must be decreased as well as the rotational speed of the polygonal scanner increased. This can quickly reach a point where both become impractical.

This invention utilises the advantages of multiple beam laser modulation and/or Scophony techniques to provide high definition video images with the added capability of stereoscopic viewing. This is achieved in certain embodiments of the current invention without the need to increase component performance such as modulation bandwidth and scanner speed significantly beyond conventional levels. An imaging technique which allows the acousto-optic modulator position and Scophony distance to be varied independently is also disclosed as a part of the invention.

According to the present invention, there is provided apparatus for producing high definition projected video images comprising light-emitting means providing in use at least one collimated beam of light. acousto-optic means for modulating said at least one beam of light, means for scanning said at least one beam of light at a substantially constant angular velocity in a plane aligned with the direction of travel of the modulating sound in the acousto-optic means and means for matching optically the angular velocity with respect to the scanning means of the modulating sound in the acousto-optic means to the angular velocity of beam scanning of the scanning means so that said modulating sound angular velocity of the angular velocity of an image of the pattern thereof is substantially equal to and aligned with said beam scanning angular velocity and, for a given length of optical path intermediate the position of modulation and the scanning means, the bandwidth of the projected video image is substantially greater in use than the bandwidth achievable with a single channel acousto-optic modulator positioned at the Scophony distance from the scanning means, said Scophony distance being no less than said given length of optical path.

For the purpose of this invention, the bandwidth of a video image is taken to mean the product of the number of video channels which it comprises and the average number of line scans per unit time interval for a single channel.

According to a preferred form of the present invention, there is provided apparatus for use in producing high definition projected video images comprising light-emitting means, primary scanning means, a plurality of spaced light paths for at least one particular wavelength of projected light between the light-emitting means and the primary scanning means, a corresponding plurality of acousto-optic light modulation means each said modulation means positioned in a respective light path to modulate in use a respective beam of light from said light-emitting means so that the angular velocity with respect to the primary scanning means of the modulating sound wave in the respective modulation means or an image of the pattern thereof is substantially equal to and aligned with the optical angular scan velocity of said primary scanning means, means for combining all modulated light beams in use into one composite set of beams prior to incidence on the primary scanning means, and secondary scanning means arranged to scan in a direction substantially normal to the scan direction of said primary means whereby a video image extending in two dimensions is produced.

Preferably light-emitting means comprises one or more lasers.

Advantageously, the light of one or more of the light beams of a particular wavelength is polarised in one direction whilst the light of the remainder of the light beams of said particular wavelength is polarised in an orthogonal direction prior to being formed into one composite set of scanning beams by the combination means.

In certain preferred embodiments of the invention, the plurality of light modulation means modulates in accordance with video signals corresponding to a first perspective view of the scene to be displayed the light beams having prior to encountering the combination means one polarisation and the light beams having prior to encountering the combination means a polarisation orthogonal to the polarisation corresponding to said first perspective view are modulated in accordance with video signals corresponding to a second perspective view of said scene by said light modulation means, whereby, in use, a stereoscopic image of the scene may be viewed through polarisation selective light-transmitting means.

In accordance with another embodiment of the invention, different light modulation means each receive, in use, respective different modulation signals originating from the same high bandwidth serial signal source, said respective different signals being provided by said signal source during respective different intervals of time to electronic means, and said electronic means re-timing said respective different signals and providing to said different modulation means a corresponding number of lower bandwidth respectively different simultaneous modulation signals.

In certain embodiments an image of the modulated sound wave pattern in a respective light modulation means is formed spaced from said modulation means by imaging means disposed between said modulation means and the primary scanning means. This may be a real image or a virtual image.

Advantageously, the optical powers in the two directions corresponding to the primary and secondary scan directions of the imaging means are different, so that, in use, the resolution of the video image in the secondary scan direction may be selected without dependence on the optical constraints imposed by the modulation means and/or the primary scanning means.

According to some embodiments of the invention one block of acousto-optic material in combination with a number of acoustic transducers on one face of said block and spaced in a direction normal to that of the light to be modulated comprise a corresponding number of light modulation means.

Advantageously, a plurality of spatially separated light beams may, in use, and prior to modulation, be produced from a single beam by acousto-optic deflection with multiple drive frequencies. Alternatively one or more polarisation selective components may be used alone or in combination with acousto-optic deflection to provide one or more pairs of orthogonally polarised spatially separated light beams. The polarisation selective component may comprise a multi-layer or birefringent beam splitter arranged to split each incident beam, in use, into a pair of orthogonally polarised resulting beams of light.

The invention will now be described with reference to the accompanying drawings in which:-

Figure 1 is a plan view of components arranged to exploit the Scophony effect according to the prior art.

Figures 2A and 2B show two alternative arrangements of components in which an image of modulation means is formed and it is this which is positioned to satisfy the Scophony condition.

Figures 3A and 3B provide a diagrammatic side view of apparatus constructed in accordance with the invention. Figure 3A shows the optical paths from light-emitting means to primary scanning means and, for reasons of clarity, Figure 3B shows the paths following deflection by primary scanning means.

Figure 4 shows an alternative polarisation selective component for use in apparatus constructed according to the invention.

Figure 5 illustrates how a stereoscopic image may be displayed and viewed in accordance with the invention and,

Figure 6 shows schematically how high bandwidth video information on a single channel may be reformatted into two lower bandwidth parallel channels for display by apparatus constructed in accordance with the invention.

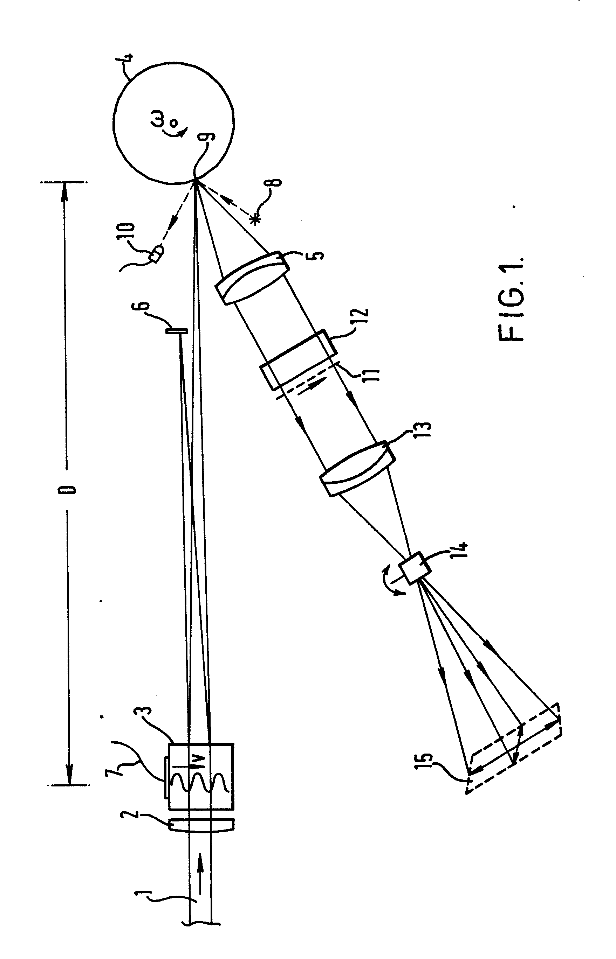

The relationship between an acousto-optic modulator and a polygonal scanner in order to satisfy the Scophony condition is illustrated in Figure 1.

A collimated beam of light 1 passes through a weakly converging lens 2 following which acousto-optic modulator 3. Modulator 3 is positioned at a distance D from polygonal scanner 4. The angular velocity of scanner 4 is related to the velocity of sound v in modulator 3 by the relationship

$$\omega = {}^{v}/_{2D} \quad (1)$$

Under this condition any acoustic pattern inside the modulator which is imaged by lens 5 following diffraction past beam stop 6 and deflection by scanner 4 is frozen in space by the equal and opposite effects of acoustic wave and polygonal scanner. In this manner high definition video signals fed into the modulator through input 7 are not smeared by the time taken for them to traverse beam 1. In order to synchronise each line of video to the position of its respective polygonal facet 9, a reference beam is transmitted from point source 8 via facet 9 to photo-receptor 10. Whilst lens 5 forms an image of the video data in modulator 3 in a horizontal line 11, an auxiliary cylindrical lens 12 forms an image of the facet 9 in the vertical plane at the same place. This mitigates any pyramidal errors of the facets or variations in the direction of the polygon's axis of rotation.

The scanned line 11 is now imaged by lens 13 via a vertical scanner 14 which is scanned at video field rates providing a TV raster image 15.

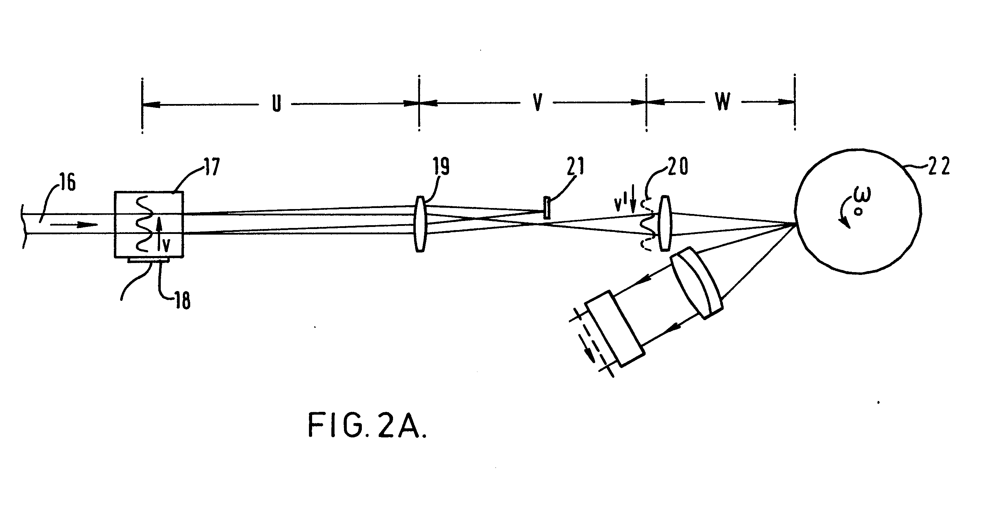

Figure 2A illustrates how an intermediate image may be formed of the acousto-optic modulator. This image must then be positioned with respect to the line scanner to satisfy the Scophony condition. Collimated beam 16 passes through modulator 17. Transducer 18 feeds this with signals from the opposite side whilst lens 19 forms an inverted image of the diffracted light pattern at position 20. Beam stop 21 is conveniently placed at a focused image of the zero order undiffracted light. The object and image distances U and V of lens 19 and the distance W from the image to the scanner 22 all combine to satisfy the Scophony condition. The intermediate imaged velocity v' is given by

$$v' = \frac{V}{U}\, v \quad \text{and as before} \quad \omega = \frac{V}{2\,WU}\, v \quad (2)$$

It will be apparent that an intermediate image of the initial acoustically diffracted pattern need not be formed by a lens as illustrated but may be formed as a virtual image either by a lens or by reflection by a mirror surface. It further follows that the Scophony condition requires that formulae (1) and (2) above apply for imaging in the direction of the scanned video line, but other imaging regimes may be applied in a plane orthogonal to this line.

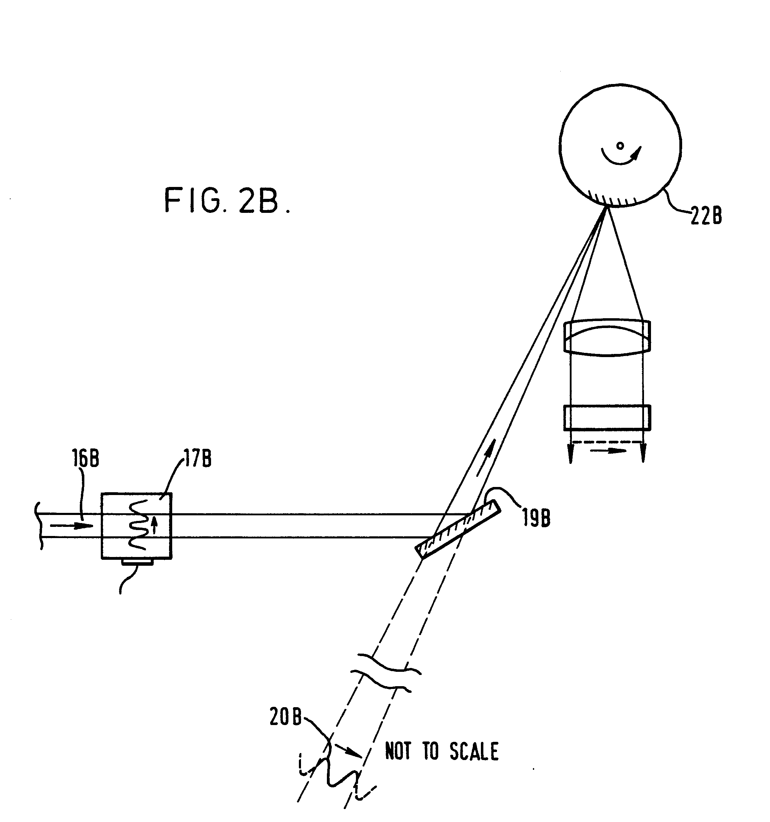

Figure 2B illustrates the formation of a virtual image employing a curved mirror surface intermediate between the scanner and acousto-optic modulator. The collimated beam 16B passes through modulator 17B. The diffracted light pattern is imaged by a mirror 19B with a concave surface which provides optical power. This creates a magnified virtual image 20B of the travelling light pattern. The angular velocity of this pattern 20B with respect to the scanner 22B is determined by the power of the convergent mirror 19B. Thus different speeds of scanner may be accomodated by selecting the appropriate mirror curvature.

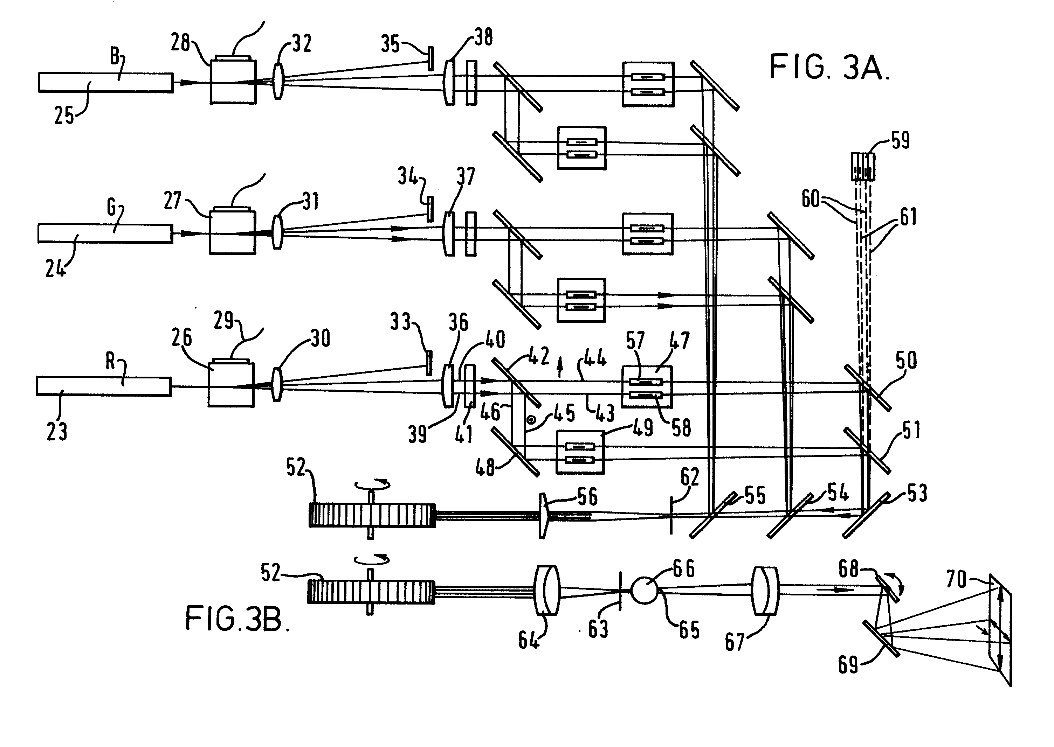

Figures 3A and 3B show apparatus in accordance with the current invention, in which a multiplicity of beams is generated in each of three primary colours, each beam being independently modulated according to Scophony principles and all beams being combined prior to deflection by the polygonal (primary) scanner.

For reasons of clarity Figure 3B shows a vertical section through the optical paths following deflection by the polygonal scanner.

Three sources of laser light 23, 24 and 25 each provide a single beam of red (610 nM), green (514 nM) and blue (476 nM) light respectively. Each beam encounters an acousto-optic deflector/modulator, respectively 26, 27 and 28. The arrangement of Figs. 3A and 3B is shown as a side view and each modulator, by application of a combination of two high frequencies to its piezo-electric transducer 29, will split the entering beam into three components, an undeflected zero order and two vertically deflected components separated by a small angle. The angle of deflection for each will depend on the wavelength of the light and the frequencies applied. For instance, with red light of 610 nM passing through deflector 26 with frequencies of 110 mHz and 90 mHz, the angles of deflection will respectively be 18.5 m rads and 15.1 m rads assuming a velocity of sound in the deflector of 3.63 x 10⁶ mms/sec. By suitable choice of frequencies for the other deflectors and by setting the energy levels of each appropriately, three equal pairs of beams, each being separated vertically by approximately 2 mms, are formed at a distance of 600 mms from its respective deflector. Weak lenses 30, 31 and 32 ensure that a beam waist is formed for each beam at this distance. Beam stops 33, 34 and 35 ensure that any undiffracted light is caught before each beam pair encounters a weak field lens, 36, 37 and 38 respectively. It is the purpose of this field lens to re-converge the weakly diverging beams to a point near the beam scanner thus limiting its required aperture. As the arrangements are identical for each particular primary colour the description will be restricted to the paths of the red beams until their combination with the other colours into one composite set of beams. The re-converged beams 39 and 40 separated by 2 mms between centres and having a width of approximately 1 mm each now pass through a polarisation rotator 41, prior to encountering a polarisation splitter 42. This ensures that, whatever the polarisation of light leaving source 23, this is set prior to impingement on splitter 42 at 45° or so to the vertical. This results in two pairs of beams. Beams 43 and 44 polarised in one direction encounter a multiple acousto-optic modulator assembly 47, whilst beams 45 and 46 polarised in an orthogonal direction and, following deflection by mirror 48, encounter a second multiple acousto-optic modulator assembly 49. The optical path length from each modulator via respectively mirror 50 and polarising recombiner 51 to the polygonal primary scanner 52 following deflection by mirror 53 and passage through two dichroic beam combiners 54 and 55 and a vertical cylindrical lens 56 is such that the Scophony condition is satisfied. The lens 56 has no power in the horizontal direction and does not affect this distance. Using a 25 facetted polygon rotating at 625 revolutions per second and employing $PbMbO_4$ acousto-optic material, this distance is of the order of 460 mms. Each of the modulator assemblies has two piezo-electric acoustic transducers which may independently create a diffracting sound pattern in the acousto-optic material. The transducers 57 and 58 on assembly 47 and corresponding transducers on the other modulator assemblies are positioned 2 mms apart vertically and each affect a volume of material corresponding to a particular component of the vertically spaced pair of beams passing through it. Typically these transducers are 1 mm wide with a corresponding gap between them thus avoiding undesirable cross-talk of one beam's modulated signal on another. By suitable alignment of mirror 50 and recombiner 51 the four beams corresponding to assemblies 47 and 49 can be made to originate from volumes with centres only 1 mm apart as shown at 59 with virtual rays in broken line. Because beam components 60 are orthogonally polarised to beam components 61, slight overlap between them is permitted without unwanted interference effects which can occur when two coherent sources are re-combined in this manner. In order to combine green and blue modulated beams dichroic 54 reflects green whilst transmitting red and dichroic 55 reflects blue whilst transmitting green and red.

Field lenses 36, 37 and 38 together with the correct vertical alignment of combiners 54 and 55 ensure that all rays pass through a common point in the vertical plane shown schematically as a gap in line 62. Lens 56 has two purposes. It produces a de-magnified image of the multiple line structure 59 on the reflecting facet of scanner 52 in the vertical direction. It also re-images the nominal beam stop 62 to a position 63 in combination with lens 64 (corresponding to lens 5 in Figure 1). Lens 64 forms the first horizontally focused image of the acoustically diffracted light at positions 65 behind a cylindrical rod 66. The purpose of rod 66 is twofold. It introduces a second stage of de-magnification in the vertical direction resulting in a group of scan lines having the correct width (4 picture elements as illustrated) compared to its length. The second purpose of rod 66 is to re-image nominal beam stop 63 in combination with lens 67 - (corresponding to lens 13) in Figure 1) onto the - (secondary) frame scanner 68. An auxiliary mirror 69 deflects the two-dimensional raster scan pattern to screen 70.

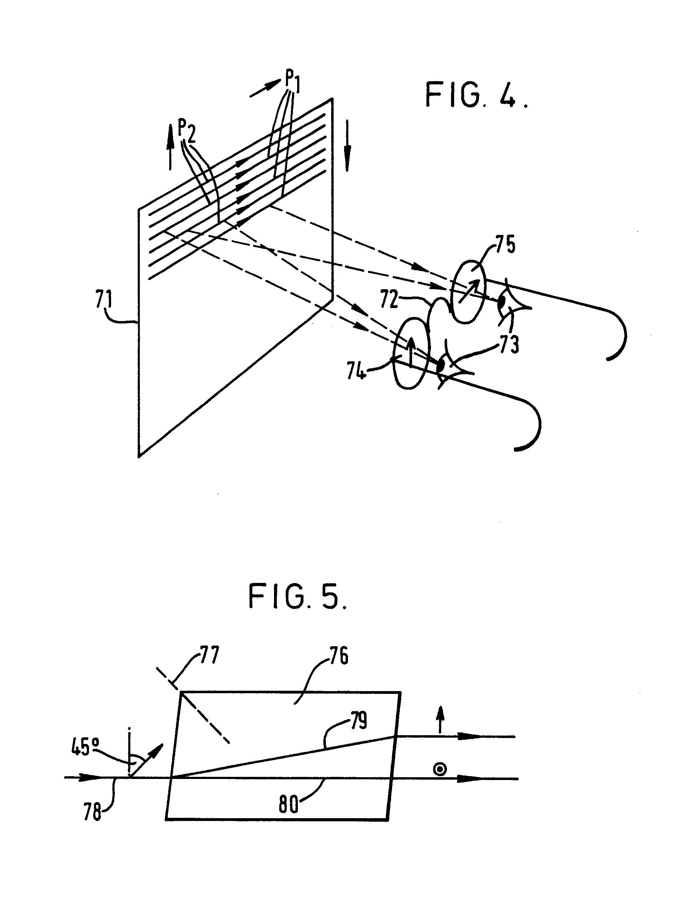

The arrangement of Figures 3A and 3B permits the use of conventional 625/525 line TV scan rates and mechanisms, whilst achieving four times the line resolution and providing the highest possible resolution along each line by utilising the Scophony principle. A very useful feature of this invention is that it allows the display of stereoscopic images. This is illustrated in Figure 4. The scanned image is projected onto a screen 71 and comprises two video channels containing lines $P_1$ and $P_2$ respectively. A few of the horizontal scan lines are shown. The lines $P_2$ are vertically polarised whilst the alternating lines $P_1$ are horizontally polarised. Spectacles 72 are used by an observer 73 to view the screen, the left eye seeing only lines $P_2$ through a vertically polarising filter 74 and the right eye seeing only the horizontally polarised lines through a corresponding filter 75. In this manner the correct perspective view for each eye may be displayed simultaneously and a fully stereoscopic image observed.

Figure 5 illustrates an alternative device for producing and, in principle, combining separated beams of orthogonal polarisation. A birefringent crystal such as calcite 76 is arranged with its optic axis 77 at an angle to the incident beam 78. Although the entry and exit faces are typically normal to the incident light, one ray ( the extraordinary ray) 79 is deflected from the path of the ordinary ray 80 and exits parallel to but displaced from this. The polarisation vector of the extraordinary ray is in a plane containing the axis of the crystal, whereas the ordinary ray's polarisation vector is perpendicular to this. By ensuring that the incident beam is circularly polarised, unpolarised or polarised at 45° to these two prime directions two orthogonally polarised beams of equal energy will emerge from the crystal. Their separation for a given angle between incident beam and optic axis will be determined by the length of the crystal. It will be apparent that by placing two crystals in series, the second rotated by 45° about the incident beam direction relative to the first four beams, one pair for each of two polarisation directions may be obtained. When this technique is utilised, beams become separated both horizontally and vertically. However, the Scophony technique has a very useful feature which permits horizontal displacement of the light source prior to entry into the acousto-optic medium without this causing any mis-registration in the final image. This is because the timing difference introduced for light reaching the display surface is exactly compensated by a variation of the natural delay of the video signal in the acousto-optic medium incurred by virtue of the speed of sound therein.

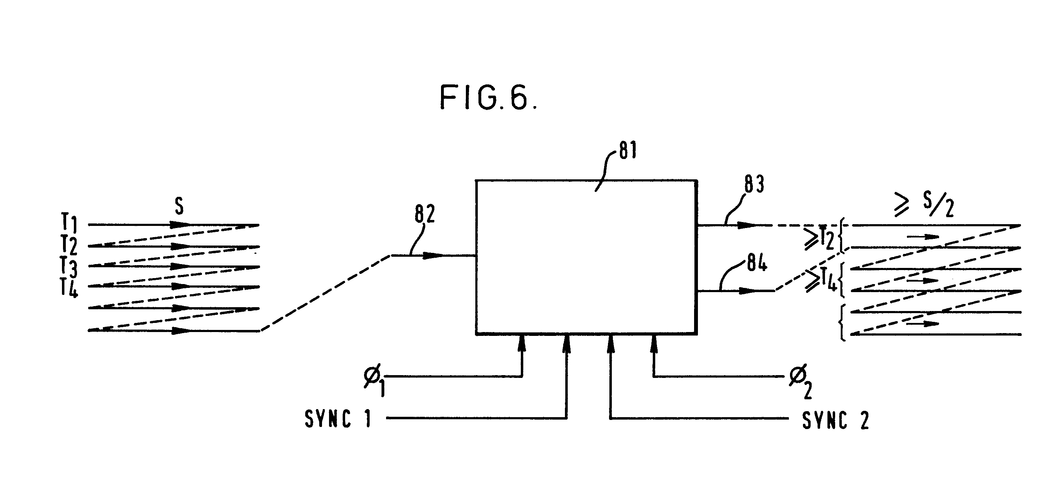

High definition video images are conveniently transmitted as a single high bandwidth raster signal. Figure 6 illustrates how this signal may be reprocessed into two lower bandwidth parallel signals for use by apparatus in accordance with the invention.

Lines are received and scanned at a nominal speed (picture elements per second) S. They commence at T1, T2 etc. A memory buffer 81 receives these signals on input 82 together with synchronisation and clock signals SYNC 1 and ø1.

At time T2 the first line has been stored and the second line begins. Preferably storage is digital and the buffer therefore includes analogue to digital conversion at the input and digital to analogue conversion at each of its outputs 83 and 84. After T2 the data corresponding to both the first and second line may be read out at approximately half the initial rate, or S/2. Normally this process is commenced only when an external synchronisation signal SYNC 2 is received from the polygonal scanner facet detector corresponding to photo-receptor 10 in Figure 1. Also, providing the data is not read out too fast, an external clock ø2 may be chosen to more precisely match the characteristics of the scanning system.

Whilst particular arrangements of the invention have been illustrated in detail, other arrangements are possible. For instance the arrangement of Figure 3A may be combined with the imaging principles illustrated in Figure 2 in order to increase the distance between a modulator assembly and the polygonal scanner or to increase the rotational speed of the scanner without a commensurate reduction in this distance. Thus, higher line scan rates may be employed. It will be clear that, whilst a vertical folded path arrangement has been used, horizontal arrangements are equally possible.

The property exhibited by the acousto-optic modulator when used in the Scophony configuration may be utilised to combine beams arriving at the polygonal scanner at different angles, the resulting timing difference being compensated by an equivalent timing difference between corresponding modulators measured as the time taken for the acoustic wave to travel from the transducer to the position of the light beam. This facility allows the dichroic combiners 54 and 55 of Figure 3A to be replaced by narrow mirrors or prisms in certain configurations, one colour being reflected by this component into the correct optical path whilst the other colour or colours pass behind or in front of the component.

Whilst vertical and horizontal polarisation vectors are used in the illustrated example the axes of polarisation may be rotated through 45° following recombination, or the plane of separation may be chosen to lie at this angle so that a 45° polarisation vector results without further components. Circular polarisation may also be used. Although the stereoscopic image shown has alternate lines with orthogonal polarisation, small re-alignments of mirror 48 and recombiner 51 and their counterparts can result in the scan lines of both polarised perspectives being super-imposed on the display screen.

The embodiment of Figures 3A and 3B shows apparatus with four scanning beams for each primary colour. The principles of the invention may be extended to many more simultaneously scanned beam elements. For instance, with each light source being split into 8 beams, a vertical resolution of 5000 scan lines may be achieved using a conventional 625 line scan rate. Although a combination of acousto-optic deflection and polarisation splitting has been employed to achieve the multiplicity of beam elements, one or other may be used independently. The light source has been shown as three sources, one for each of red, green and blue. It will be apparent that more than one of these may be produced from one laser source directly or indirectly. For instance, the red light may come from a dye laser pumped by the same Argon laser producing green and/or blue light. Different lasers may be used to produce the orthogonally polarised beam elements, thus obviating the need for splitting means such as component 42 of Fig. 3A.

Finally, whilst the separation between elements of the combined set of scanning beams is illustrated as one or two line widths, other regimes in which the separation is increased to a larger multiple of line widths are possible.

## Claims

1. Apparatus for producing high definition projected video images comprising light-emitting means providing in use at least one collimated beam of light, acousto-optic means for modulating said at least one beam of light, means for scanning said at least one beam of light at a substantially constant angular velocity in a plane aligned with the direction of travel of the modulating sound in the acousto-optic means and means for matching optically the angular velocity with respect to the scanning means of the modulating sound in the acousto-optic means to the angular velocity of beam scanning of the scanning means so that said modulating sound angular velocity or the angular velocity of an image of the pattern thereof is substantially equal to and aligned with said beam scanning angular velocity and, for a given length of optical path intermediate the position of modulation and the scanning means, the bandwidth of the projected video image is substantially greater in use than the bandwidth achievable with a single channel acousto-optic modulator positioned at the Scophony distance from the scanning means, said Scophony distance being no less than said given length of optical path.

2. Apparatus according to claim 1 in which the scanning means comprises primary scanning means and the acousto-optic means comprises a plurality of spaced light paths, for at least one particular wavelength of projected light, between the light emitting means and the primary scanning means and a corresponding plurality of acousto-optic modulating elements, each said modulating element being positioned in a respective light path to modulate in use a respective beam of light from said light emitting means, and means for combining all modulated light beams in use into one composite set of beams prior to incidence on the primary scanning means.

3. Apparatus according to claim 1 in which in use the image of the pattern of the modulating sound is a magnified image and is formed by convergent optical means positioned between the modulating means and the scanning means, whereby increased video bandwidth is achieved.

4. Apparatus according to claim 2 or claim 3 in which scanning means includes secondary scanning means arranged to scan in a direction substantially normal to the scan direction of and at a substantially lower speed than said primary scanning means whereby a video image extending in two dimensions is produced.

5. Apparatus according to claim 2 or claim 3 in which light emitting means comprises at least one laser.

6. Apparatus according to claim 2 in which, in use, the light of one or more of said light beams of a particular wavelength is polarised in a direction orthogonal to the light of at least one other of said light beams prior to being formed into said one composite set of beams.

7. Apparatus according to claim 6 in which the plurality of modulating elements modulate in accordance with video signals corresponding to a first perspective view of the scene to be displayed the light beams having prior to encountering the combination means one polarisation and modulate in accordance with signals corresponding to a second perspective view of said scene the light beams having an orthogonal polarisation prior to combination, whereby in use, a stereoscopic image of said scene is viewed through polarisation-selective light transmitting means.

8. Apparatus according to claim 2 in which different light modulating elements each receive, in use, respective different modulation signals originating from the same high bandwidth serial signal source, said respective different signals being provided by said source during respective different intervals of time to electronic means and said electronic means being arranged to retime said different signals so that said different modulating elements each receive a different signal simultaneously, each said received signal having a bandwidth substantially less than that of said high bandwidth serial signal.

9. Apparatus according to claim 3 in which the convergent optical means has different powers in two orthogonal planes.

10. Apparatus according to claim 2 in which a plurality of modulating elements comprise a single block of acousto-optic material and a corresponding plurality of acoustic transducers on one face of said block.

11. Apparatus according to claim 2 in which the plurality of light paths is provided by an acousto-optic deflector driven, in use, with a plurality of frequencies.

12. Apparatus according to claim 2 in which a plurality of light paths is provided by splitting a single beam of light with one or more polarisation selective components.

FIG.1.

FIG. 2A.

0 211 596

0 211 596

FIG. 2B.

NOT TO SCALE

FIG. 3A.

FIG. 3B.

FIG. 4.

FIG. 5.

# FIG.6.

0 211 596